# EUROPEAN PATENT APPLICATION

(11) **EP 4 642 048 A1**
(43) Date of publication of application: **29.10.2025**
(21) Application number: 24766174.7
(22) Date of filing: 09.01.2024
(51) Int. Cl.: H04Q 11/00

(54) **ACCESS METHOD, PON SYSTEM, FIRST ONU, AND OLT**

(30) Priority: 06.03.2023 CN 202310246584
(71) Applicant: Huawei Technologies Co., Ltd., Shenzhen, Guangdong 518129 (CN)
(72) Inventor: WU, Xuming, Shenzhen, Guangdong 518129 (CN); ZHENG, Gang, Shenzhen, Guangdong 518129 (CN); LIU, Dekun, Shenzhen, Guangdong 518129 (CN); HUANG, Rongfang, Shenzhen, Guangdong 518129 (CN)
(74) Representative: Huawei European IPR
(86) International application number: PCT/CN2024/071289
(87) International publication number: WO 2024/183451

(57) **Abstract**

This application provides an access method, applied to the optical communication field. The access method includes the following steps: A first ONU receives broadcast information from an OLT, where the OLT is connected to a plurality of ONUs through an ODN, the plurality of ONUs include the first ONU, and the broadcast information includes information about an upstream wavelength supported by the OLT. When the upstream wavelength supported by the OLT does not include an upstream wavelength of the first ONU, the first ONU does not start registration; or when the upstream wavelength supported by the OLT includes an upstream wavelength of the first ONU, the first ONU starts registration. In the technical solutions of this application, information about an upstream wavelength supported by a current OLT port is broadcast in a downstream direction, so that an ONU with an upstream wavelength not supported by the current OLT port can be prevented from accessing a PON system, to improve reliability of optical communication.

## Description

This application claims priority to Chinese Patent Application No. 202310246584.X, filed with the China National Intellectual Property Administration on March 6, 2023 and entitled "ACCESS METHOD, PON SYSTEM, FIRST ONU, AND OLT", which is incorporated herein by reference in its entirety.

### TECHNICAL FIELD

This application relates to the optical communication field, and in particular, to an access method, a passive optical network (passive optical network, PON) system, a first optical network unit (optical network unit, ONU), and an optical line termination (optical line termination, OLT).

### BACKGROUND

A PON system includes an OLT, an optical distribution network (optical distribution network, ODN), and a plurality of ONUs. The PON system may allow receiving of a plurality of different wavelengths through wavelength division multiplexing (wavelength division multiplexing, WDM). For example, a WDM apparatus may be disposed in the OLT. In an upstream direction, the plurality of ONUs are configured to output a plurality of upstream optical signals with different wavelengths. The ODN is configured to: combine the plurality of upstream optical signals, and transmit a combined upstream optical signal to the OLT. The OLT is configured to demultiplex the combined upstream optical signal through the WDM apparatus, to obtain the plurality of upstream optical signals. The OLT separately processes the plurality of upstream optical signals.

In an actual application, when an upstream wavelength supported by the OLT does not include an upstream wavelength of the ONU, the OLT cannot normally receive an upstream optical signal. As a result, reliability of optical communication is reduced.

### SUMMARY

This application provides an access method, a PON system, a first ONU, and an OLT. Information about an upstream wavelength supported by a current OLT port is broadcast in a downstream direction, so that an ONU with an upstream wavelength not supported by the current OLT port can be prevented from accessing the PON system, to improve reliability of optical communication.

A first aspect of this application provides an access method. The access method includes the following steps: A first ONU receives broadcast information from an OLT, where the OLT is connected to a plurality of ONUs through an ODN, the plurality of ONUs include the first ONU, and the broadcast information includes information about an upstream wavelength supported by the OLT. When the upstream wavelength supported by the OLT does not include an upstream wavelength of the first ONU, the first ONU does not start registration; or when the upstream wavelength supported by the OLT includes an upstream wavelength of the first ONU, the first ONU starts registration.

In an optional manner of the first aspect, the plurality of ONUs further include a second ONU. Before the first ONU receives the broadcast information from the OLT, the second ONU has registered with the OLT. An upstream wavelength for communication between the second ONU and the OLT is a first wavelength. The upstream wavelength supported by the OLT does not include the first wavelength. In this application, the information about the upstream wavelength supported by the OLT is broadcast, so that a conflict between different ONUs can be avoided, to improve reliability of optical communication.

In an optional manner of the first aspect, the OLT includes a first OLT and a second OLT, and the plurality of ONUs further include a second ONU. Before the first ONU receives the broadcast information from the OLT, the second ONU has registered with the OLT. An upstream wavelength for communication between the second ONU and the OLT is a first wavelength. The upstream wavelength supported by the OLT does not include the first wavelength. When wavelengths of a plurality of upstream optical signals are the same, a wavelength conflict is caused. As a result, reliability of optical communication is reduced. In this application, the information about the upstream wavelength supported by the OLT is broadcast, so that a conflict between different ONUs can be avoided, to improve reliability of optical communication.

In an optional manner of the first aspect, the first wavelength is 1260-1280 nanometers, 1290-1310 nanometers, or 1284-1288 nanometers.

In an optional manner of the first aspect, a quantity of bits of the information about the upstream wavelength supported by the OLT is equal to a quantity of wavelengths indicated by the information about the upstream wavelength. In this application, the quantity of bits of the information about the upstream wavelength is controlled, so that a size of the broadcast information can be reduced, to save transmission resources.

In an optional manner of the first aspect, the information about the upstream wavelength supported by the OLT includes a first bit, a second bit, and a third bit, where the first bit indicates whether the OLT supports an upstream wavelength of 1260-1280 nanometers; the second bit indicates whether the OLT supports an upstream wavelength of 1290-1310 nanometers; and the third bit indicates whether the OLT supports an upstream wavelength of 1284-1288 nanometers.

In an optional manner of the first aspect, the information about the upstream wavelength supported by the OLT includes a first bit, a second bit, a third bit, and a fourth bit, where the first bit indicates whether the OLT supports an upstream wavelength of 1260-1280 nanometers; the second bit indicates whether the OLT supports an upstream wavelength of 1290-1310 nanometers; the third bit indicates whether the OLT supports an upstream wavelength of 1284-1288 nanometers; and the fourth bit indicates whether the OLT supports an upstream wavelength of 1298-1302 nanometers.

In an optional manner of the first aspect, the broadcast information is a downstream physical frame. The information about the upstream wavelength supported by the OLT is located in a passive optical network identifier (passive optical network identifier, PON-ID) field of the downstream physical frame.

In an optional manner of the first aspect, the broadcast information is a physical layer operations, administration and maintenance (physical layer operations, administration and maintenance, PLOAM) message. The information about the upstream wavelength supported by the OLT is located in a message content field in the PLOAM message.

In an optional manner of the first aspect, the PLOAM message is a burst profile message, and the information about the upstream wavelength supported by the OLT is located in a downstream PON identifier field in the message content field.

In an optional manner of the first aspect, the broadcast information is a downstream frame start signal (frame start signal, FS) frame, and an allocation identifier in the downstream FS frame indicates the information about the upstream wavelength supported by the OLT.

A second aspect of this application provides an access method. The access method includes the following steps: An OLT transmits broadcast information to a first ONU, where the OLT is connected to a plurality of ONUs through an ODN, the plurality of ONUs include the first ONU, and the broadcast information includes information about an upstream wavelength supported by the OLT. When the upstream wavelength supported by the OLT does not include an upstream wavelength of the first ONU, the information about the upstream wavelength supported by the OLT is used by the first ONU not to start registration. When the upstream wavelength supported by the OLT includes an upstream wavelength of the first ONU, the information about the upstream wavelength supported by the OLT is used by the first ONU to start registration.

In an optional manner of the second aspect, the plurality of ONUs further include a second ONU. Before the first ONU receives the broadcast information from the OLT, the second ONU has registered with the OLT. An upstream wavelength for communication between the second ONU and the OLT is a first wavelength. The upstream wavelength supported by the OLT does not include the first wavelength. In an optional manner of the second aspect, the OLT includes a first OLT and a second OLT, and the plurality of ONUs further include a second ONU. Before the first ONU receives the broadcast information from the OLT, the second ONU has registered with the OLT. An upstream wavelength for communication between the second ONU and the OLT is a first wavelength. The upstream wavelength supported by the OLT does not include the first wavelength.

A third aspect of this application provides a PON system. The PON system includes an OLT, an ODN, and a plurality of ONUs, where the OLT is connected to the plurality of ONUs through the ODN, and the plurality of ONUs include a first ONU. The OLT is configured to transmit broadcast information to the first ONU, where the broadcast information includes information about an upstream wavelength supported by the OLT. When the upstream wavelength supported by the OLT does not include an upstream wavelength of the first ONU, the first ONU does not start registration. When the upstream wavelength supported by the OLT includes an upstream wavelength of the first ONU, the first ONU starts registration.

In an optional manner of the third aspect, the plurality of ONUs further include a second ONU. Before the first ONU receives the broadcast information from the OLT, the second ONU has registered with the OLT. An upstream wavelength for communication between the second ONU and the OLT is a first wavelength. The upstream wavelength supported by the OLT does not include the first wavelength. In an optional manner of the third aspect, the OLT includes a first OLT and a second OLT, and the plurality of ONUs further include a second ONU. Before the first ONU receives the broadcast information from the OLT, the second ONU has registered with the OLT. An upstream wavelength for communication between the second ONU and the OLT is a first wavelength. The upstream wavelength supported by the OLT does not include the first wavelength.

A fourth aspect of this application provides a first ONU. The first ONU includes a receiver and a processor. The receiver is configured to receive broadcast information from an OLT, where the OLT is connected to a plurality of ONUs through an ODN, and the plurality of ONUs include the first ONU. When an upstream wavelength supported by the OLT does not include an upstream wavelength of the first ONU, the processor is configured not to start registration based on information about the upstream wavelength supported by the OLT. Alternatively, when an upstream wavelength supported by the OLT includes an upstream wavelength of the first ONU, the processor is configured to start registration based on information about the upstream wavelength supported by the OLT.

In an optional manner of the fourth aspect, the plurality of ONUs further include a second ONU. Before the first ONU receives the broadcast information from the OLT, the second ONU has registered with the OLT. An upstream wavelength for communication between the second ONU and the OLT is a first wavelength. The upstream wavelength supported by the OLT does not include the first wavelength.

In an optional manner of the fourth aspect, the first ONU further includes a transmitter. After the processor starts registration based on the information about the upstream wavelength supported by the OLT, the transmitter is configured to send an upstream optical signal to the OLT. A wavelength of the upstream optical signal is within an upstream wavelength range supported by the OLT.

A fifth aspect of this application provides an OLT. The OLT includes a processor and a transmitter. The processor is configured to generate broadcast information. The transmitter is configured to transmit the broadcast information to a first ONU, where the OLT is connected to a plurality of ONUs through an ODN, the plurality of ONUs include the first ONU, and the broadcast information includes information about an upstream wavelength supported by the OLT. When the upstream wavelength supported by the OLT does not include an upstream wavelength of the first ONU, the information about the upstream wavelength supported by the OLT is used by the first ONU not to start registration. When the upstream wavelength supported by the OLT includes an upstream wavelength of the first ONU, the information about the upstream wavelength supported by the OLT is used by the first ONU to start registration.

In an optional manner of the fifth aspect, the plurality of ONUs further include a second ONU. Before the first ONU receives the broadcast information from the OLT, the second ONU has registered with the OLT. An upstream wavelength for communication between the second ONU and the OLT is a first wavelength. The upstream wavelength supported by the OLT does not include the first wavelength.

In an optional manner of the fifth aspect, the OLT further includes a receiver. The receiver is configured to receive an upstream optical signal from the first ONU. A wavelength of the upstream optical signal is within an upstream wavelength range supported by the OLT.

It should be understood that descriptions of the optional manners in the second aspect, the third aspect, the fourth aspect, or the fifth aspect are similar to the descriptions of the optional manners in the first aspect. Therefore, for descriptions of the optional manners in the second aspect, the third aspect, the fourth aspect, or the fifth aspect, refer to the descriptions of the optional manners in the first aspect. For example, a quantity of bits of the information about the upstream wavelength supported by the OLT is equal to a quantity of wavelengths indicated by the information about the upstream wavelength. For another example, the broadcast information is a downstream physical frame. The information about the upstream wavelength supported by the OLT is located in a passive optical network identifier field of the downstream physical frame.

A sixth aspect of this application provides a computer storage medium. The computer storage medium stores instructions; and when the instructions are executed on a computer, the computer is enabled to perform the method according to any one of the first aspect or the implementations of the first aspect; or the computer is enabled to perform the method according to any one of the second aspect or the implementations of the second aspect.

A seventh aspect of this application provides a computer program product. When the computer program product is executed on a computer, the computer is enabled to perform the method according to any one of the first aspect or the implementations of the first aspect; or the computer is enabled to perform the method according to the second aspect or the implementations of the second aspect.

### BRIEF DESCRIPTION OF DRAWINGS

FIG. 1 is a first diagram of a structure of a PON system according to an embodiment of this application;
FIG. 2 is a second diagram of a structure of a PON system according to an embodiment of this application;
FIG. 3 is a third diagram of a structure of a PON system according to an embodiment of this application;
FIG. 4 is a diagram of a structure of a downstream FS frame according to an embodiment of this application;
FIG. 5 is a diagram of a structure of a downstream physical frame according to an embodiment of this application;
FIG. 6 is a diagram of a structure of a PLOAM message according to an embodiment of this application;
FIG. 7 is a first schematic flowchart of an access method according to an embodiment of this application;
FIG. 8 is a second schematic flowchart of an access method according to an embodiment of this application;
FIG. 9 is a diagram of a structure of a first ONU according to an embodiment of this application; and
FIG. 10 is a diagram of a structure of an OLT according to an embodiment of this application.

### DESCRIPTION OF EMBODIMENTS

This application provides an access method, a passive optical network (passive optical network, PON) system, a first optical network unit (optical network unit, ONU), and an optical line termination (optical line termination, OLT). Information about an upstream wavelength supported by a current OLT port is broadcast in a downstream direction, so that an ONU with an upstream wavelength not supported by the current OLT port can be prevented from accessing a PON system, to improve reliability of optical communication. It should be understood that "first", "second", and the like used in this application are merely used for distinguishing and description, but should not be understood as an indication or implication of relative importance or an indication or implication of a sequence. In addition, for brevity and clarity, reference numbers and/or letters are repeated in a plurality of accompanying drawings of this application. Repetition is not indicative of a strict limiting relationship between various embodiments and/or configurations.

In a PON system, an OLT may allow receiving of a plurality of different wavelengths through wavelength division multiplexing. Specifically, in an upstream direction, a plurality of ONUs are configured to output a plurality of upstream optical signals with different wavelengths. An ODN is configured to: combine the plurality of upstream optical signals, and transmit a combined upstream optical signal to the OLT. The OLT is configured to demultiplex the combined upstream optical signal through a wavelength division multiplexing (wavelength division multiplexing, WDM) apparatus, to obtain the plurality of upstream optical signals. However, when an upstream wavelength supported by the OLT does not include an upstream wavelength of the ONU, the OLT cannot normally receive the upstream optical signal. As a result, reliability of optical communication is reduced.

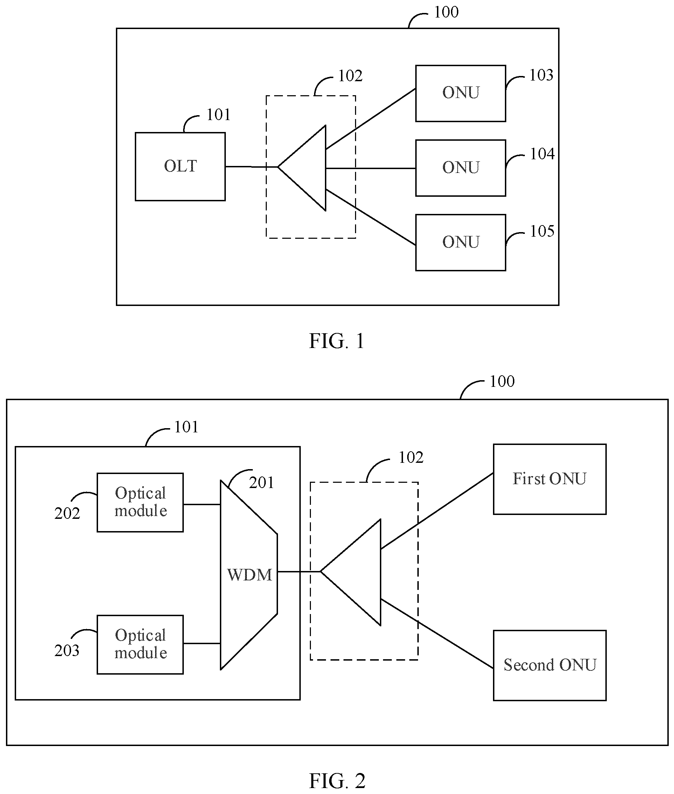

Therefore, this application provides a PON system. FIG. 1 is a first diagram of a structure of a PON system according to an embodiment of this application. As shown in FIG. 1, the PON system 100 includes an OLT 101, an ODN 102, and a plurality of ONUs. In the example in FIG. 1, the plurality of ONUs include an ONU 103 to an ONU 105. The OLT 101 is connected to the plurality of ONUs through the ODN 102. The ODN 102 includes an optical splitter/combiner. In a downstream direction, the OLT 101 distributes a downstream optical signal to all of the ONUs through the optical splitter. In an upstream direction, an upstream optical signal from each optical termination is coupled to the OLT 101 through the combiner. The OLT 101 is configured to transmit broadcast information to a first ONU. The first ONU is an ONU that has not accessed the OLT 101. The first ONU may be any one of the ONU 103 to the ONU 105. The broadcast information includes information about an upstream wavelength supported by the OLT 101. When a wavelength of a transmitter of the first ONU is an upstream wavelength not supported by the OLT 101, the first ONU is configured not to start registration based on the information about the upstream wavelength supported by the OLT 101. For example, upstream wavelengths supported by the OLT 101 are a wavelength 1 and a wavelength 2, an upstream wavelength not supported by the OLT 101 is a wavelength 3, and a wavelength of the transmitter of the first ONU is the wavelength 3. When the wavelength of the transmitter of the first ONU is the upstream wavelength supported by the OLT 101, the first ONU is configured to start registration based on the information about the upstream wavelength supported by the OLT 101. The starting registration may be starting the transmitter of the first ONU or responding to registration authorization of the OLT 101.

In embodiments of this application, the first ONU has a capability of transmitting an upstream optical signal to the OLT 101 only after registration is started. When the upstream wavelength supported by the OLT 101 does not include the wavelength of the transmitter of the first ONU, the first ONU does not start registration, in other words, does not transmit an upstream optical signal to the OLT 101. Therefore, in embodiments of this application, reliability of optical communication can be improved. After the first ONU starts registration, the first ONU may send an upstream optical signal to the OLT 101 through the transmitter. A wavelength of the upstream optical signal is within an upstream wavelength range supported by the OLT 101.

It should be understood that "the wavelength of the transmitter of the first ONU is the upstream wavelength supported by the OLT 101" is a necessary condition for " starting registration by the first ONU". Therefore, even if the wavelength of the transmitter of the first ONU is the upstream wavelength supported by the OLT 101, the first ONU may not start registration.

An upstream wavelength used by the OLT 101 depends on a hardware configuration of the OLT 101. For example, if optical modules that can respectively process a wavelength 1 and a wavelength 2 are designed in the OLT 101, upstream wavelengths used by the OLT 101 include the wavelength 1 and the wavelength 2. An upstream wavelength not used by the OLT 101 is a wavelength other than the wavelength 1 and the wavelength 2. The upstream wavelength supported by the OLT 101 is briefly referred to as a wavelength supported by the OLT 101. The upstream wavelength not supported by the OLT 101 is briefly referred to as a wavelength not supported by the OLT 101. The wavelength not supported by the OLT 101 may be an upstream wavelength not used by the OLT 101, or may be an upstream wavelength used by the OLT 101. When the wavelength not supported by the OLT 101 is the wavelength used by the OLT 101, an upstream wavelength of the first ONU conflicts with an upstream wavelength of a second ONU in the PON system 100. For example, an upstream wavelength of the second ONU is 1290-1310 nanometers, and an upstream wavelength of the first ONU is 1290-1310 nanometers. For another example, an upstream wavelength of the second ONU is 1290-1310 nanometers, and an upstream wavelength of the first ONU is 1298-1302 nanometers. The second ONU is an ONU that has accessed the OLT 101, in other words, the second ONU may transmit an upstream optical signal to the OLT 101 through the ODN 102. A communication wavelength between the second ONU and the OLT 101 is a first wavelength. Therefore, the first wavelength is the upstream wavelength used by the OLT 101.

When the first ONU is the ONU 103 in FIG. 1, the second ONU may be the ONU 104 and/or the ONU 105 in FIG. 1. After the first ONU starts registration, the first ONU may access the OLT 101. The second ONU and the first ONU may access a same OLT through the ODN 102, or may access different OLTs. Descriptions are separately provided below.

FIG. 2 is a second diagram of a structure of a PON system according to an embodiment of this application. As shown in FIG. 2, the PON system includes an OLT 101, an ODN 102, a first ONU, and a second ONU. The OLT 101 includes a WDM 201, an optical module 202, and an optical module 203. The optical module 202 is configured to process an upstream optical signal with a wavelength 1. The optical module 203 is configured to process an upstream optical signal with a wavelength 2. In this case, wavelengths used by the OLT 101 include the wavelength 1 and the wavelength 2. The OLT 101 is connected to the first ONU and the second ONU through the ODN 102. A communication wavelength between the second ONU and the OLT 101 is a first wavelength. The first wavelength is also referred to as the wavelength 1. An upstream optical signal transmitted by the second ONU enters the optical module 202 after passing through the ODN 102 and the WDM 201. The optical module 202 is configured to process the upstream optical signal transmitted by the second ONU. A wavelength of the first ONU is the wavelength 2. An upstream optical signal of the first ONU enters the optical module 203 after passing through the ODN 102 and the WDM 201. The optical module 203 is configured to process the upstream optical signal of the first ONU. In FIG. 2, the second ONU and the first ONU are connected to the same OLT through the ODN 102.

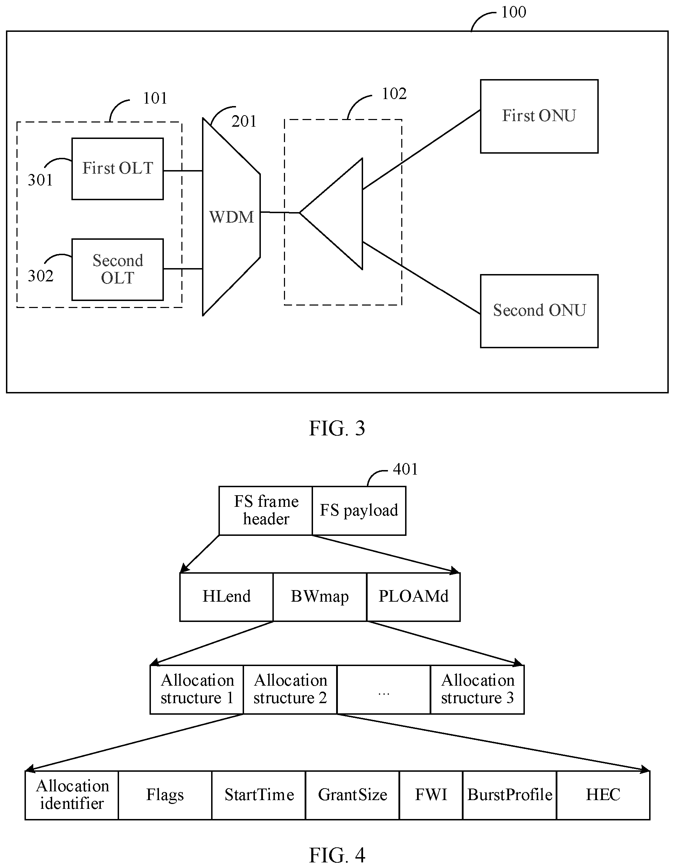

FIG. 3 is a third diagram of a structure of a PON system according to an embodiment of this application. As shown in FIG. 3, the PON system includes an OLT 101, a WDM 201, an ODN 102, a first ONU, and a second ONU. The OLT 101 includes a first OLT 301 and a second OLT 302. The OLT 101 is connected to two ONUs through the WDM 201 and the ODN 102. The first OLT 301 is configured to process an upstream optical signal with a wavelength 1. The second OLT 302 is configured to process an upstream optical signal with a wavelength 2. In this case, wavelengths used by the OLT 101 include the wavelength 1 and the wavelength 2. A wavelength of the second ONU is the wavelength 1. An upstream optical signal transmitted by the second ONU enters the first OLT 301 after passing through the ODN 102 and the WDM 201. The first OLT 301 is configured to process the upstream optical signal transmitted by the second ONU. A wavelength of the first ONU is the wavelength 2. An upstream optical signal of the first ONU enters the second OLT 302 after passing through the ODN 102 and the WDM 201. The second OLT 302 is configured to process the upstream optical signal of the first ONU. In FIG. 3, the second ONU and the first ONU are connected to different OLTs through the ODN 102.

In this embodiment of this application, the wavelengths used by the OLT 101 may be three wavelengths or four wavelengths. The three wavelengths are 1260-1280 nanometers, 1284-1288 nanometers, and 1290-1310 nanometers. The four wavelengths are 1260-1280 nanometers, 1284-1288 nanometers, 1290-1310 nanometers, and 1298-1302 nanometers. Each of 1260-1280 nanometers, 1284-1288 nanometers, 1290-1310 nanometers, and 1298-1302 nanometers represents one wavelength. A center wavelength of 1260-1280 nanometers is 1270 nanometers. A center wavelength of 1284-1288 nanometers is 1286 nanometers. A center wavelength of 1290-1310 nanometers is 1300 nanometers. A center wavelength of 1298-1302 nanometers is 1300 nanometers. The first wavelength may be any one of the three wavelengths or the four wavelengths.

In the examples in FIG. 1 to FIG. 3, the PON system 100 may be a 50G-PON (50-gigabit-capable passive optical network, 50G-PON) system. Upstream wavelengths used by the OLT 101 may be the foregoing three wavelengths or the foregoing four wavelengths. The PON system 100 may alternatively be a combination of a 50G-PON system and a GPON (gigabit PON) system. In this case, wavelengths not supported by the OLT 101 are 1290-1310 nanometers and 1298-1302 nanometers. A wavelength supported by the OLT 101 may be a wavelength other than 1290-1310 nanometers and 1298-1302 nanometers in the foregoing three wavelengths or the foregoing four wavelengths. The PON system 100 may alternatively be a combination of a 50G-PON system and an XG-PON (10-gigabit-capable passive optical network, XG-PON) system. In this case, a wavelength not supported by the OLT 101 may be 1260-1280 nanometers. A wavelength supported by the OLT 101 may be a wavelength other than 1260-1280 nanometers in the foregoing three wavelengths or the foregoing four wavelengths. The PON system 100 may alternatively be a combination of a 50G-PON system, an XG-PON system, and a GPON system. In this case, wavelengths not supported by the OLT 101 may be 1260-1280 nanometers, 1290-1310 nanometers, and 1298-1302 nanometers. A wavelength supported by the OLT 101 is 1284-1288 nanometers.

It should be understood that the OLT 101 may send broadcast information on a channel. In this case, an ONU outside the channel cannot receive the broadcast information. For example, the PON system 100 includes a 50G-PON channel and an XG-PON channel. The OLT 101 sends broadcast information on the 50G-PON channel. Because downstream wavelengths of the 50G-PON channel and the XG-PON channel are different, a filter of an ONU belonging to the XG-PON channel cannot correctly obtain the broadcast information, in other words, the ONU of the XG-PON channel cannot receive the broadcast information. In embodiments of this application, the first ONU may belong to the 50G-PON channel. The second ONU may belong to the 50G-PON channel, the XG-PON channel, or the G-GPON channel. It can be learned from the foregoing descriptions that the broadcast information includes information about an upstream wavelength supported by the OLT 101 (briefly referred to as upstream wavelength information). The broadcast information may be a downstream frame start signal (frame start signal, FS) frame. An allocation identifier in the downstream FS frame indicates the information about the upstream wavelength. Descriptions are provided below.

FIG. 4 is a diagram of a structure of a downstream FS frame according to an embodiment of this application. As shown in FIG. 4, the downstream FS frame consists of a downstream FS frame header field and an FS payload field. The downstream FS frame header field consists of a fixed length HLend structure and two variable length partitions. The two variable length partitions are a bandwidth map (bandwidth map, BWmap) field and a physical layer operations, administration and maintenance downstream (physical layer operations, administration and maintenance downstream, PLOAMd) field. The BWmap field is a series of 8-byte allocation structure fields. An actual length of the BWmap field is 8×N bytes. N is an integer greater than or equal to 1. The allocation structure field includes an allocation identifier (allocation identifier, Alloc-ID) field, a flags field, a StartTime field, a GrantSize field, a forced wake-up indication (forced wake-up indication, FWI) field, a BurstProfile field, and a header error correction (header error correction, HEC) field. A value of the Alloc-ID is a 14-bit number that identifies a recipient of corresponding upstream bandwidth allocation: a specific traffic-bearing entity within a particular ONU, or a specific contention-based function which can be used by multiple eligible ONUs. By the scope, the Alloc-ID can be directed (associated with a unique ONU) and broadcast. Table 1 is function descriptions of the Alloc-ID.

**Table 1**

| Alloc-ID | Name | Descriptions |
|---|---|---|
| 0-1019 | Default directed | Default Alloc-ID, which is implicitly assigned to an ONU whose ONU-ID is equal to the default Alloc-ID. |
| 1020 | Reserved broadcast | Used by an OLT channel termination (channel termination, CT) in a serial number grant allocation structure to indicate that any ONU that performs transmission at a ρ0Φ0 upstream line rate and executes a serial number acquisition phase of an activation procedure may use this allocation to transmit a serial number response. |
| 1021 | Reserved broadcast | Used by the OLT CT in a serial number grant allocation structure to indicate that any ONU that performs transmission at a ρ0Φ1 upstream line rate and executes a serial number acquisition phase of an activation procedure may use this allocation to transmit a serial number response. |
| 1022 | Reserved broadcast | Used by the OLT CT in a serial number grant allocation structure to indicate that any ONU that performs transmission at a ρ0Φ2 upstream line rate and executes a serial number acquisition phase of an activation procedure may use this allocation to transmit a serial number response. |
| 1023 | Reserved broadcast | Used by the OLT CT in a serial number grant allocation structure to indicate that any ONU that performs transmission at a ρ0Φ0, ρ0Φ1, or ρ0Φ2 upstream line rate and executes a serial number acquisition phase of an activation procedure may use this allocation to transmit a serial number response. |
| 1024-16383 | Assignable | If an ONU needs directed Alloc-IDs in excess of a default Alloc-ID, the OLT CT assigns additional Alloc-IDs to the ONU by selecting a unique number from this range and communicating it to the ONU using a directed Assign_Alloc-ID PLOAM message. |

In Table 1, ρ0 refers to a fundamental line rate and is expressed in Gbit/s (Gbit/s). Φ0, Φ1, and Φ2 indicate different line rate coefficients. In embodiments of this application, a value of the Alloc-ID may indicate the information about the upstream wavelength supported by the OLT 101. An example in which the upstream wavelengths used by the OLT 101 include three wavelengths is used below for description. The three wavelengths include a wavelength 1, a wavelength 2, and a wavelength 3. The three wavelengths may be classified into a wavelength supported by the OLT 101 and a wavelength not supported by the OLT 101. There are eight allocation manners of the three wavelengths. Table 2 is example combinations of the allocation manners of the three wavelengths.

**Table 2**

| Row number | Supported wavelength | Unsupported wavelength |
|---|---|---|
| 1 | None | Wavelength 1, wavelength 2, and wavelength 3 |
| 2 | Wavelength 1 | Wavelength 2 and wavelength 3 |
| 3 | Wavelength 2 | Wavelength 1 and wavelength 3 |
| 4 | Wavelength 3 | Wavelength 1 and wavelength 2 |
| 5 | Wavelength 1 and wavelength 2 | Wavelength 3 |
| 6 | Wavelength 1 and wavelength 3 | Wavelength 2 |
| 7 | Wavelength 2 and wavelength 3 | Wavelength 1 |
| 8 | Wavelength 1, wavelength 2, and wavelength 3 | None |

The OLT 101 may establish a correspondence between Table 2 and the Alloc-ID in Table 1. For example, Table 3 is function descriptions of a modified Alloc-ID.

**Table 3**

| Alloc-ID | Name | Description |
|---|---|---|
| 1024 | Reserved broadcast | Used by the OLT CT in a serial number grant allocation structure to indicate that any ONU that performs transmission at a ρ0Φ0 upstream line rate and executes a serial number acquisition phase of an activation procedure may use this allocation to transmit a serial number response, so as to indicate that the upstream wavelength supported by the OLT is the wavelength 1, and upstream wavelengths not supported by the OLT are the wavelength 2 and the wavelength 3. |
| 1025 | Reserved broadcast | Used by the OLT CT in a serial number grant allocation structure to indicate that any ONU that performs transmission at a ρ0Φ1 upstream line rate and executes a serial number acquisition phase of an activation procedure may use this allocation to transmit a serial number response, so as to indicate that the upstream wavelength supported by the OLT is the wavelength 1, and upstream wavelengths not supported by the OLT are the wavelength 2 and the wavelength 3. |
| 1026 | Reserved broadcast | Used by the OLT CT in a serial number grant allocation structure to indicate that any ONU that performs transmission at a ρ0Φ2 upstream line rate and executes a serial number acquisition phase of an activation procedure may use this allocation to transmit a serial number response, so as to indicate that the upstream wavelength supported by the OLT is the wavelength 1, and upstream wavelengths not supported by the OLT are the wavelength 2 and the wavelength 3. |
| 1027 | Reserved broadcast | Used by the OLT CT in a serial number grant allocation structure to indicate that any ONU that performs transmission at a ρ0Φ0, ρ0Φ1, or ρ1Φ2 upstream line rate and executes a serial number acquisition phase of an activation procedure may use this allocation to transmit a serial number response, so as to indicate that the upstream wavelength supported by the OLT is the wavelength 1, and upstream wavelengths not supported by the OLT are the wavelength 2 and the wavelength 3. |

In Table 3, the OLT 101 establishes a correspondence between the value 1024 of the Alloc-ID, the upstream line rate ρ0Φ0, the wavelength (the wavelength 1) supported by the OLT 101, and the wavelengths (the wavelength 2 and the wavelength 3) not supported by the OLT 101. Similarly, the OLT 101 may further establish a correspondence between the Alloc-ID, the upstream line rate ρ0Φ0, and another supported wavelength. Table 4 is an example of the correspondence provided in embodiments of this application.

**Table 4**

| Row number | Alloc-ID | Upstream line rate | Supported wavelength | Unsupported wavelength |
|---|---|---|---|---|
| 1 | 1020 | ρ0Φ0 | None | Wavelength 1, wavelength 2, and wavelength 3 |
| 2 | 1024 | ρ0Φ0 | Wavelength 1 | Wavelength 2 and wavelength 3 |
| 3 | 1028 | ρ0Φ0 | Wavelength 2 | Wavelength 1 and wavelength 3 |
| 4 | 1032 | ρ0Φ0 | Wavelength 3 | Wavelength 1 and wavelength 2 |
| 5 | 1036 | ρ0Φ0 | Wavelength 1 and wavelength 2 | Wavelength 3 |
| 6 | 1040 | ρ0Φ0 | Wavelength 1 and wavelength 3 | Wavelength 2 |
| 7 | 1044 | ρ0Φ0 | Wavelength 2 and wavelength 3 | Wavelength 1 |
| 8 | 1048 | ρ0Φ0 | Wavelength 1, wavelength 2, and wavelength 3 | None |

When the first ONU receives a downstream grant structure whose Alloc-ID is 1020, it indicates that the OLT 101 does not support any wavelength. In this case, the first ONU does not start registration. When the first ONU receives a downstream FS frame whose Alloc-ID is 1024, it indicates that a wavelength supported by the OLT 101 is the wavelength 1, and wavelengths not supported by the OLT 101 are the wavelength 2 and the wavelength 3. If a wavelength of the transmitter of the first ONU is the wavelength 1, the first ONU may start registration, an upstream line rate is ρ0Φ0, and a sequence number response is transmitted by using 1024. If a wavelength of the transmitter of the first ONU is a wavelength other than the wavelength 1, for example, the wavelength 2, the first ONU does not start registration. For descriptions of other Alloc-IDs in Table 4, refer to the descriptions of 1020 and 1024. Therefore, in embodiments of this application, the Alloc-ID may indicate the information about the upstream wavelength supported by the OLT 101.

In the foregoing Table 3, the OLT further establishes a correspondence between the value 1025 of the Alloc-ID, the upstream line rate ρ0Φ1, the wavelength (the wavelength 1) supported by the OLT 101, and the wavelengths (the wavelength 2 and the wavelength 3) not supported by the OLT 101. Similarly, the OLT 101 may further establish a correspondence between the Alloc-ID, the upstream line rate ρ0Φ1, and another supported wavelength. Table 5 is an example of the correspondence provided in embodiments of this application.

**Table 5**

| Row number | Alloc-ID | Upstream line rate | Supported wavelength | Unsupported wavelength |
|---|---|---|---|---|
| 1 | 1021 | ρ0Φ1 | None | Wavelength 1, wavelength 2, and wavelength 3 |
| 2 | 1025 | ρ0Φ1 | Wavelength 1 | Wavelength 2 and wavelength 3 |
| 3 | 1029 | ρ0Φ1 | Wavelength 2 | Wavelength 1 and wavelength 3 |
| 4 | 1033 | ρ0Φ1 | Wavelength 3 | Wavelength 1 and wavelength 2 |
| 5 | 1037 | ρ0Φ1 | Wavelength 1 and wavelength 2 | Wavelength 3 |
| 6 | 1041 | ρ0Φ1 | Wavelength 1 and wavelength 3 | Wavelength 2 |
| 7 | 1045 | ρ0Φ1 | Wavelength 2 and wavelength 3 | Wavelength 1 |
| 8 | 1049 | ρ0Φ1 | Wavelength 1, wavelength 2, and wavelength 3 | None |

In the foregoing Table 3, the OLT 101 further establishes a correspondence between the value 1026 of the Alloc-ID, the upstream line rate ρ0Φ2, the wavelength (the wavelength 1) supported by the OLT 101, and the wavelengths (the wavelength 2 and the wavelength 3) not supported by the OLT 101. Similarly, the OLT 101 may further establish a correspondence between the Alloc-ID, the upstream line rate ρ0Φ2, and another supported wavelength. Table 6 is an example of the correspondence provided in embodiments of this application.

**Table 6**

| Row number | Alloc-ID | Upstream line rate | Supported wavelength | Unsupported wavelength |
|---|---|---|---|---|
| 1 | 1022 | ρ1Φ2 | None | Wavelength 1, wavelength 2, and wavelength 3 |
| 2 | 1026 | ρ1Φ2 | Wavelength 1 | Wavelength 2 and wavelength 3 |
| 3 | 1030 | ρ1Φ2 | Wavelength 2 | Wavelength 1 and wavelength 3 |
| 4 | 1034 | ρ1Φ2 | Wavelength 3 | Wavelength 1 and wavelength 2 |
| 5 | 1038 | ρ1Φ2 | Wavelength 1 and wavelength 2 | Wavelength 3 |
| 6 | 1042 | ρ1Φ2 | Wavelength 1 and wavelength 3 | Wavelength 2 |
| 7 | 1046 | ρ1Φ2 | Wavelength 2 and wavelength 3 | Wavelength 1 |
| 8 | 1050 | ρ1Φ2 | Wavelength 1, wavelength 2, and wavelength 3 | None |

In the foregoing Table 3, the OLT 101 further establishes a correspondence between the value 1027 of the Alloc-ID, the upstream line rate (ρ0Φ0, ρ0Φ1, or ρ0Φ2), the wavelength (the wavelength 1) supported by the OLT, and the wavelengths (the wavelength 2 and the wavelength 3) not supported by the OLT. Similarly, the OLT 101 may further establish a correspondence between the Alloc-ID, the upstream line rate (ρ0Φ0, ρ0Φ1, or ρ0Φ2), and another supported wavelength. Table 7 is an example of the correspondence provided in embodiments of this application.

**Table 7**

| Row number | Alloc-ID | Upstream line rate | Supported wavelength | Unsupported wavelength |
|---|---|---|---|---|
| 1 | 1023 | ρ0Φ0, ρ0Φ1, or ρ1Φ2 | None | Wavelength 1, wavelength 2, and wavelength 3 |
| 2 | 1027 | ρ0Φ0, ρ0Φ1, or ρ1Φ2 | Wavelength 1 | Wavelength 2 and wavelength 3 |
| 3 | 1031 | ρ0Φ0, ρ0Φ1, or ρ1Φ2 | Wavelength 2 | Wavelength 1 and wavelength 3 |
| 4 | 1035 | ρ0Φ0, ρ0Φ1, or ρ1Φ2 | Wavelength 3 | Wavelength 1 and wavelength 2 |
| 5 | 1039 | ρ0Φ0, ρ0Φ1, or ρ1Φ2 | Wavelength 1 and wavelength 2 | Wavelength 3 |
| 6 | 1043 | ρ0Φ0, ρ0Φ1, or ρ1Φ2 | Wavelength 1 and wavelength 3 | Wavelength 2 |
| 7 | 1047 | ρ0Φ0, ρ0Φ1, or ρ1Φ2 | Wavelength 2 and wavelength 3 | Wavelength 1 |
| 8 | 1050 | ρ0Φ0, ρ0Φ1, or ρ1Φ2 | Wavelength 1, wavelength 2, and wavelength 3 | None |

It should be understood that the foregoing Table 3 to Table 7 are merely examples in which the information about the upstream wavelength is indicated by using the Alloc-ID according to embodiments of this application. In an actual application, a person skilled in the art may define another specific Alloc-ID to indicate the information about the upstream wavelength. For example, the OLT 101 replaces 1020, 1024, 1028, ..., 1044, and 1048 in Table 4 with Alloc-IDs 1020 to 1027. The OLT 101 replaces 1021, 1025, 1029, ..., 1045, and 1049 in Table 5 with Alloc-IDs 1028 to 1035. The OLT 101 replaces 1022, 1026, 1030, ..., 1046, and 1050 in Table 6 with Alloc-IDs 1036 to 1043. The OLT 101 replaces 1023, 1027, 1031, ..., 1047, and 1051 in Table 7 with Alloc-IDs 1044 to 1051.

It should be understood that, in the examples of Table 3 to Table 7, an example in which the upstream wavelengths used by the OLT 101 include the three wavelengths is used for description in this application. The OLT 101 indicates the information about the upstream wavelength and the upstream line rate by using 8×4 Alloc-IDs. In an actual application, a quantity of upstream wavelengths used by the OLT may be another value. For example, the upstream wavelengths used by the OLT include four wavelengths. The four wavelengths may be allocated as a supported wavelength and an unsupported wavelength. There are 16 allocation manners of the four wavelengths. In this case, the OLT may indicate the information about the upstream wavelength and the upstream line rate by using 16×4 Alloc-IDs.

It can be learned from the foregoing descriptions that the broadcast information may be a downstream FS frame. In an actual application, the broadcast information may alternatively be a downstream physical frame or a physical layer operations, administration and maintenance (physical layer operations, administration and maintenance, PLOAM) message. Descriptions are separately provided below.

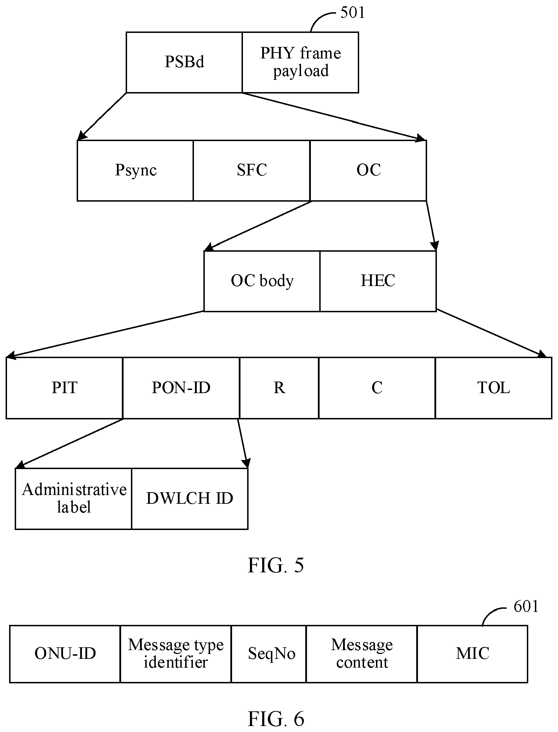

The downstream physical frame is also referred to as a downstream PHY frame. FIG. 5 is a diagram of a structure of a downstream physical frame according to an embodiment of this application. As shown in FIG. 5, the downstream physical frame 501 includes a physical synchronization block (PSBd) and a PHY frame payload. The physical synchronization block includes a physical synchronization sequence (PSync), a superframe counter (SFC) structure, and an operation control (operation control, OC) structure. The OC structure includes a 51-bit OC body and a 13-bit HEC field. The OC body includes a passive optical network identifier type (passive optical network identifier type, PIT) field, a passive optical network identifier (passive optical network identifier, PON-ID) field, an R field, a C field, and a TOL field. The R field is a reserved field. A value of the C field is a transmit optical level reference point indicator. A value of the TOL field may indicate a current OLT CT transceiver launch power into the ODN or reach extender transceiver launch power. The PON-ID field includes a management label field and a downstream wavelength channel identifier (downstream wavelength channel identifier, DWLCH ID) field. A size of the DWLCH ID field is 4 bits. The information about the upstream wavelength may be located in the DWLCH ID field.

FIG. 6 is a diagram of a structure of a PLOAM message according to an embodiment of this application. As shown in FIG. 6, the PLOAM message 601 includes an ONU-ID field, a message type identifier (message type ID) field, a SeqNo field, a message content (message content) field, and a message integrity check (message integrity check, MIC) field. Table 8 is size and function descriptions of the fields in the PLOAM message 601.

**Table 8**

| Octet | Field name | Description |
|---|---|---|
| 1-2 | ONU-ID | The ONU-ID field is 10 bits aligned at an LSB end of a 2-byte field, and six most significant bits are reserved and should be set to 0 by a transmitter and ignored by a receiver |
| 3 | Message type identifier | Indicates a message type |
| 4 | SeqNo | Sequence number |
| 5-40 | Message content | |
| 41-48 | MIC | Message integrity check |

The information about the upstream wavelength may be located in the message content field. In this case, the message content field includes an upstream wavelength information field and a padding field. The upstream wavelength information field is used to carry the information about the upstream wavelength. The padding field is used to pad unused data, for example, a bit 0. The upstream wavelength information field may be located in a fifth byte in the PLOAM message 601. When a bit size of the information about the upstream wavelength is 4 bits, the information about the upstream wavelength may be located in last four bits of the fifth byte. In this case, eight bits in the fifth byte may be represented as 0000 ABCD. "0" indicates a bit 0. For descriptions of ABCD, refer to subsequent descriptions.

The PLOAM message 601 may be a burst profile (burst_profile) message. A message content field in the burst_profile message includes a burst profile control 1 field, a burst profile control 2 field, a delimiter control field, a delimiter pattern field, a preamble descriptor field, a preamble word count field, a preamble pattern field, a PON-TAG field, a downstream PON identifier field, an ONURssiMin field, and an ONURssiMax field. The downstream PON identifier field is also referred to as a downstream PON-ID field. The downstream PON identifier field is located in octets 35-38 in the burst_profile message. Content in the downstream PON-ID field is valid only for a time and wavelength division multiplexing (time and wavelength division multiplexing, TWDM) PON, and is meaningless for a (time division multiplexing, TDM) PON. Therefore, the information about the upstream wavelength may be carried by using the downstream PON identifier field. For example, the information about the upstream wavelength may be located in a first byte in the downstream PON identifier field. When a bit size of the information about the upstream wavelength is 4 bits, the information about the upstream wavelength may be located in last four bits of the first byte. In this case, eight bits in the first byte may be represented as 0000 ABCD. "0" indicates a bit 0. For descriptions of ABCD, refer to subsequent descriptions.

In an actual application, a quantity of bits of the information about the upstream wavelength supported by the OLT may be equal to a quantity of wavelengths indicated by the information about the upstream wavelength. For example, the upstream wavelengths used by the OLT 101 include three wavelengths. The three wavelengths include a wavelength 1, a wavelength 2, and a wavelength 3. The information about the upstream wavelength is ABC. Each of A, B, and C represents one bit. In this case, the information about the upstream wavelength includes three bits, in other words, a quantity of bits of the information about the upstream wavelength is 3. The three wavelengths and the three bits are in one-to-one correspondence. A corresponds to the wavelength 1. B corresponds to the wavelength 2. C corresponds to the wavelength 3. Each bit indicates whether the OLT 101 supports a corresponding wavelength. For example, when a value of A is 0, it indicates that the OLT does not support the wavelength 1; or when a value of A is 1, it indicates that the OLT supports the wavelength 1. Similarly, for descriptions of B and C, refer to the descriptions of A.

The three wavelengths may be 1260-1280 nanometers, 1284-1288 nanometers, and 1290-1310 nanometers. The wavelength 1 may be any one of the three wavelengths. The wavelength 2 may be any wavelength other than the wavelength 1 in the three wavelengths. The wavelength 3 is a wavelength other than the wavelength 1 and the wavelength 2 in the three wavelengths. For example, the wavelength 1 is 1260-1280 nanometers, the wavelength 2 is 1284-1288 nanometers, and the wavelength 3 is 1290-1310 nanometers. For another example, the wavelength 1 is 1260-1280 nanometers, the wavelength 2 is 1290-1310 nanometers, and the wavelength 3 is 1284-1288 nanometers.

In an actual application, the upstream wavelengths used by the OLT 101 may include four wavelengths. The four wavelengths include the foregoing three wavelengths and a wavelength 4. The information about the upstream wavelength is ABCD. Each of A, B, C, and D represents one bit. In this case, the information about the upstream wavelength includes four bits, in other words, a quantity of bits of the information about the upstream wavelength is 4. The four wavelengths and the four bits are in one-to-one correspondence. A corresponds to the wavelength 1. B corresponds to the wavelength 2. C corresponds to the wavelength 3. D corresponds to the wavelength 4. Each bit indicates whether the OLT 101 supports a corresponding wavelength.

The four wavelengths may be 1260-1280 nanometers, 1284-1288 nanometers, 1290-1310 nanometers, and 1298-1302 nanometers. The wavelength 1 may be any one of the four wavelengths. The wavelength 2 is any wavelength other than the wavelength 1 in the four wavelengths. The wavelength 3 is any wavelength other than the wavelength 1 and the wavelength 2 in the four wavelengths. The wavelength 4 is a wavelength other than the wavelength 1, the wavelength 2, and the wavelength 3 in the four wavelengths. For example, the wavelength 1 is 1260-1280 nanometers, the wavelength 2 is 1284-1288 nanometers, the wavelength 3 is 1290-1310 nanometers, and the wavelength 4 is 1298-1302 nanometers. For another example, the wavelength 1 is 1260-1280 nanometers, the wavelength 2 is 1290-1310 nanometers, the wavelength 3 is 1284-1288 nanometers, and the wavelength 4 is 1298-1302 nanometers.

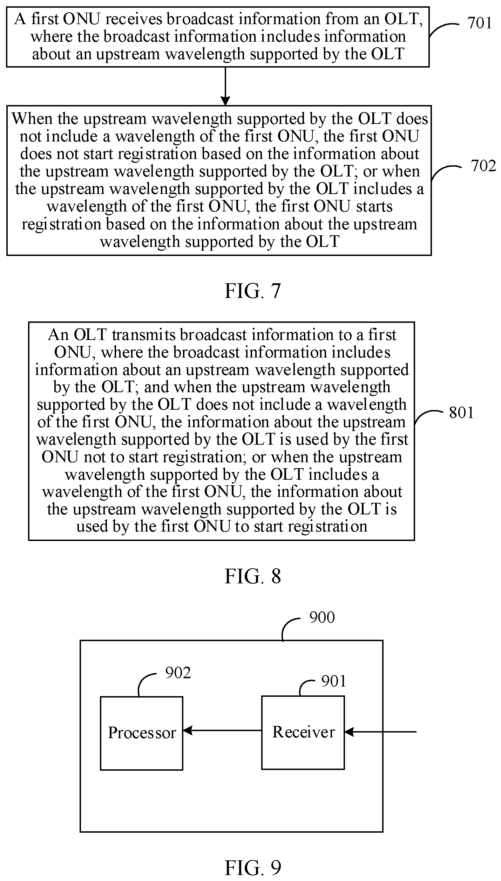

The foregoing describes the PON system provided in this application, and the following describes the access method provided in this application. FIG. 7 is a first schematic flowchart of an access method according to an embodiment of this application. As shown in FIG. 7, the access method includes the following steps.

In step 701, a first ONU receives broadcast information from an OLT, where the broadcast information includes information about an upstream wavelength supported by the OLT.

In step 702, when the upstream wavelength supported by the OLT does not include a wavelength of the first ONU, the first ONU does not start registration based on the information about the upstream wavelength supported by the OLT; or when the upstream wavelength supported by the OLT includes a wavelength of the first ONU, the first ONU starts registration based on the information about the upstream wavelength supported by the OLT.

When the upstream wavelength supported by the OLT does not include a wavelength of a transmitter of the first ONU, the first ONU is configured not to start registration based on the information about the upstream wavelength supported by the OLT. For example, upstream wavelengths supported by the OLT are a wavelength 1 and a wavelength 2, an upstream wavelength not supported by the OLT 101 is a wavelength 3, and a wavelength of the transmitter of the first ONU is the wavelength 3. When the upstream wavelength supported by the OLT includes the wavelength of the transmitter of the first ONU, the first ONU is configured to start registration based on the information about the upstream wavelength supported by the OLT.

FIG. 8 is a second schematic flowchart of an access method according to an embodiment of this application. As shown in FIG. 8, the access method includes the following steps.

In step 801, an OLT transmits broadcast information to a first ONU, where the broadcast information includes information about an upstream wavelength supported by the OLT; and when the upstream wavelength supported by the OLT does not include a wavelength of the first ONU, the information about the upstream wavelength supported by the OLT is used by the first ONU not to start registration; or when the upstream wavelength supported by the OLT includes a wavelength of the first ONU, the information about the upstream wavelength supported by the OLT is used by the first ONU to start registration.

When the upstream wavelength supported by the OLT does not include the wavelength of the first ONU, the information about the upstream wavelength supported by the OLT is used by the first ONU not to start registration. When the upstream wavelength supported by the OLT includes the wavelength of the first ONU, the information about the upstream wavelength supported by the OLT is used by the first ONU to start registration.

It should be understood that the descriptions of the access method are similar to the descriptions of the PON system in FIG. 1 to FIG. 6. Therefore, for the descriptions of the access method, refer to the foregoing descriptions of any one of FIG. 1 to FIG. 6. For example, the broadcast information is a PLOAM message or a downstream physical frame. For another example, the broadcast information is a downstream FS frame, where an allocation identifier in the downstream FS frame indicates the information about the upstream wavelength supported by the OLT. For another example, the OLT is connected to a plurality of ONUs through an ODN. Before the first ONU receives the broadcast information from the OLT, a second ONU has registered with the OLT. An upstream wavelength for communication between the second ONU and the OLT is a first wavelength. The upstream wavelength supported by the OLT does not include the first wavelength.

The foregoing describes the access method provided in this application, and the following describes the first ONU provided in this application. FIG. 9 is a diagram of a structure of a first ONU according to an embodiment of this application. As shown in FIG. 9, the first ONU 900 includes a receiver 901 and a processor 902. The receiver 901 is configured to receive broadcast information from an OLT, where the OLT is connected to a plurality of ONUs through an ODN, and the plurality of ONUs include the first ONU. The processor 902 may be a central processing unit (central processing unit, CPU), a network processor (network processor, NP), or a combination of a CPU and an NP. The processor 902 may further include a hardware chip or another general-purpose processor. The foregoing hardware chip may be an application specific integrated circuit (application specific integrated circuit, ASIC), a programmable logic device (programmable logic device, PLD), or a combination thereof. The processor 902 is configured not to start registration based on information about an upstream wavelength, where a wavelength of the first ONU 900 is an upstream wavelength not supported by the OLT. Alternatively, the processor 902 is configured to start registration based on information about an upstream wavelength, where a wavelength of the first ONU 900 is an upstream wavelength supported by the OLT.

In another embodiment, the first ONU 900 may further include a transmitter. After the processor 902 starts registration based on the information about the upstream wavelength supported by the OLT, the transmitter is configured to send an upstream optical signal to the OLT. A wavelength of the upstream optical signal is within an upstream wavelength range supported by the OLT.

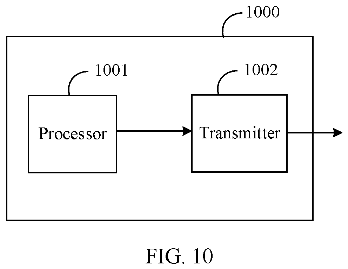

FIG. 10 is a diagram of a structure of an OLT according to an embodiment of this application. As shown in FIG. 10, the OLT 1000 includes a processor 1001 and a transmitter 1002. For descriptions of the processor 1001, refer to the foregoing descriptions of the processor 902 in FIG. 9. The processor 1001 is configured to generate broadcast information. The transmitter 1002 is configured to transmit the broadcast information to a first ONU. The OLT 1000 is connected to a plurality of ONUs through an ODN, where the plurality of ONUs include the first ONU. The broadcast information includes information about an upstream wavelength supported by the OLT 1000. The information about the upstream wavelength is used by the first ONU not to start registration, where a wavelength of the first ONU is an upstream wavelength not supported by the OLT. Alternatively, the information about the upstream wavelength is used by the first ONU to start registration, where a wavelength of the first ONU is an upstream wavelength supported by the OLT.

In another embodiment, the OLT 1000 may further include a receiver. When the information about the upstream wavelength is used by the first ONU to start registration, the receiver is configured to receive an upstream optical signal from the first ONU. A wavelength of the upstream optical signal is within an upstream wavelength range supported by the OLT 1000.

It should be understood that the descriptions of the first ONU 900 and/or the OLT 1000 are similar to the descriptions of the PON system in FIG. 1 to FIG. 6. Therefore, for the descriptions of the first ONU 900 and/or the OLT 1000, refer to the descriptions in any one of FIG. 1 to FIG. 6. For example, the broadcast information is a PLOAM message or a downstream physical frame. For another example, the broadcast information is a downstream FS frame, where an allocation identifier in the downstream FS frame indicates the information about the upstream wavelength supported by the OLT. For another example, the OLT is connected to the plurality of ONUs through the ODN, where the plurality of ONUs include the first ONU and a second ONU. Before the first ONU receives the broadcast information from the OLT, the second ONU has registered with the OLT. An upstream wavelength for communication between the second ONU and the OLT is a first wavelength. The upstream wavelength supported by the OLT does not include the first wavelength.

In another embodiment, the first ONU 900 and/or the OLT 1000 may further include a memory. The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), a flash memory, or the like. The volatile memory may be a random access memory (random access memory, RAM). The memory may be configured to store the information about the upstream wavelength supported by the OLT.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. An access method, comprising:
receiving, by a first optical network unit ONU, broadcast information from an optical line termination OLT, wherein the OLT is connected to a plurality of ONUs through an optical distribution network ODN, the plurality of ONUs comprise the first ONU, and the broadcast information comprises information about an upstream wavelength supported by the OLT; and
when the upstream wavelength supported by the OLT does not comprise an upstream wavelength of the first ONU, skipping, by the first ONU, starting registration; or when the upstream wavelength supported by the OLT comprises an upstream wavelength of the first ONU, starting, by the first ONU, registration.

2. The access method according to claim 1, wherein the plurality of ONUs further comprise a second ONU, before receiving, by the first ONU, the broadcast information from the OLT, the second ONU has registered with the OLT, an upstream wavelength for communication between the second ONU and the OLT is a first wavelength, and the upstream wavelength supported by the OLT and received by the first ONU does not comprise the first wavelength.

3. The access method according to claim 2, wherein the first wavelength is 1260-1280 nanometers, 1290-1310 nanometers, or 1284-1288 nanometers.

4. The access method according to any one of claims 1 to 3, wherein a quantity of bits of the information about the upstream wavelength supported by the OLT is equal to a quantity of wavelengths indicated by the information about the upstream wavelength supported by the OLT.

5. The access method according to claim 4, wherein the information about the upstream wavelength supported by the OLT comprises a first bit, a second bit, and a third bit, wherein
the first bit indicates whether the OLT supports an upstream wavelength of 1260-1280 nanometers;
the second bit indicates whether the OLT supports an upstream wavelength of 1290-1310 nanometers; and
the third bit indicates whether the OLT supports an upstream wavelength of 1284-1288 nanometers.

6. The access method according to claim 5, wherein the information about the upstream wavelength supported by the OLT further comprises a fourth bit; and
the fourth bit indicates whether the OLT supports an upstream wavelength of 1298-1302 nanometers.

7. The access method according to any one of claims 1 to 6, wherein the broadcast information is a downstream physical frame, and the information about the upstream wavelength supported by the OLT is located in a passive optical network identifier field of the downstream physical frame.

8. The access method according to any one of claims 1 to 6, wherein the broadcast information is a physical layer operations, administration and maintenance PLOAM message, and the information about the upstream wavelength supported by the OLT is located in a message content field in the PLOAM message.

9. The access method according to claim 8, wherein the PLOAM message is a burst profile message, and the information about the upstream wavelength supported by the OLT is located in a downstream passive optical network PON identifier field in the message content field.

10. The access method according to any one of claims 1 to 3, wherein the broadcast information is a downstream frame start signal FS frame, and an allocation identifier in the downstream FS frame indicates the information about the upstream wavelength supported by the OLT.

11. An access method, comprising:
transmitting, by an optical line termination OLT, broadcast information to a first optical network unit ONU, wherein the OLT is connected to a plurality of ONUs through an optical distribution network ODN, the plurality of ONUs comprise the first ONU, and the broadcast information comprises information about an upstream wavelength supported by the OLT, wherein
when the upstream wavelength supported by the OLT does not comprise an upstream wavelength of the first ONU, the information about the upstream wavelength supported by the OLT is used by the first ONU to skip starting registration; or when the upstream wavelength supported by the OLT comprises an upstream wavelength of the first ONU, the information about the upstream wavelength supported by the OLT is used by the first ONU to start registration.

12. The access method according to claim 11, wherein the plurality of ONUs further comprise a second ONU, before the first ONU receives the broadcast information from the OLT, the second ONU has registered with the OLT, an upstream wavelength for communication between the second ONU and the OLT is a first wavelength, and the upstream wavelength supported by the OLT and received by the first ONU does not comprise the first wavelength.

13. The access method according to claim 12, wherein the first wavelength is 1260-1280 nanometers, 1290-1310 nanometers, or 1284-1288 nanometers.

14. The access method according to any one of claims 11 to 13, wherein a quantity of bits of the information about the upstream wavelength supported by the OLT is equal to a quantity of wavelengths indicated by the information about the upstream wavelength supported by the OLT.

15. The access method according to claim 14, wherein the information about the upstream wavelength supported by the OLT comprises a first bit, a second bit, and a third bit, wherein
the first bit indicates whether the OLT supports an upstream wavelength of 1260-1280 nanometers;
the second bit indicates whether the OLT supports an upstream wavelength of 1290-1310 nanometers; and
the third bit indicates whether the OLT supports an upstream wavelength of 1284-1288 nanometers.

16. The access method according to claim 15, wherein the information about the upstream wavelength supported by the OLT further comprises a fourth bit; and
the fourth bit indicates whether the OLT supports an upstream wavelength of 1298-1302 nanometers.

17. A passive optical network PON system, comprising an optical line termination OLT, an optical distribution network ODN, and a plurality of optical network units ONUs, wherein
the OLT is connected to the plurality of ONUs through the ODN, and the plurality of ONUs comprise a first ONU;
the OLT is configured to transmit broadcast information to the first ONU, wherein the broadcast information comprises information about an upstream wavelength supported by the OLT; and
when the upstream wavelength supported by the OLT does not comprise an upstream wavelength of the first ONU, the first ONU is configured to skip starting registration based on the information about the upstream wavelength supported by the OLT; or when the upstream wavelength supported by the OLT comprises an upstream wavelength of the first ONU, the first ONU is configured to start registration based on the information about the upstream wavelength supported by the OLT.

18. The PON system according to claim 17, wherein the plurality of ONUs further comprise a second ONU, before the first ONU receives the broadcast information from the OLT, the second ONU has registered with the OLT, an upstream wavelength for communication between the second ONU and the OLT is a first wavelength, and the upstream wavelength supported by the OLT and received by the first ONU does not comprise the first wavelength.

19. A first optical network unit ONU, comprising a receiver and a processor, wherein
the receiver is configured to receive broadcast information from an optical line termination OLT, wherein the OLT is connected to a plurality of ONUs through an optical distribution network ODN, and the plurality of ONUs comprise the first ONU; and
when an upstream wavelength supported by the OLT does not comprise an upstream wavelength of the first ONU, the processor is configured to skip starting registration based on information about the upstream wavelength supported by the OLT; or when an upstream wavelength supported by the OLT comprises an upstream wavelength of the first ONU, the processor is configured to start registration based on information about the upstream wavelength supported by the OLT.

20. The first ONU according to claim 19, wherein the plurality of ONUs further comprise a second ONU, before the first ONU receives the broadcast information from the OLT, the second ONU has registered with the OLT, an upstream wavelength for communication between the second ONU and the OLT is a first wavelength, and the upstream wavelength supported by the OLT and received by the first ONU does not comprise the first wavelength.

21. The first ONU according to claim 19 or 20, wherein the first ONU further comprises a transmitter, wherein
after the processor starts registration based on the information about the upstream wavelength supported by the OLT, the transmitter is configured to send an upstream optical signal to the OLT, wherein a wavelength of the upstream optical signal is within an upstream wavelength range supported by the OLT.

22. An optical line termination OLT, comprising a processor and a transmitter, wherein
the processor is configured to generate broadcast information; and
the transmitter is configured to transmit the broadcast information to a first optical network unit ONU, wherein the OLT is connected to a plurality of ONUs through an optical distribution network ODN, the plurality of ONUs comprise the first ONU, and the broadcast information comprises information about an upstream wavelength supported by the OLT, wherein
when the upstream wavelength supported by the OLT does not comprise an upstream wavelength of the first ONU, the information about the upstream wavelength supported by the OLT is used by the first ONU to skip starting registration; or when the upstream wavelength supported by the OLT comprises an upstream wavelength of the first ONU, the information about the upstream wavelength supported by the OLT is used by the first ONU to start registration.

23. The OLT according to claim 22, wherein the plurality of ONUs further comprise a second ONU, before the first ONU receives the broadcast information from the OLT, the second ONU has registered with the OLT, an upstream wavelength for communication between the second ONU and the OLT is a first wavelength, and the upstream wavelength supported by the OLT and received by the first ONU does not comprise the first wavelength.

24. The OLT according to claim 22 or 23, wherein the OLT further comprises a receiver, wherein
the receiver is configured to receive an upstream optical signal from the first ONU, wherein a wavelength of the upstream optical signal is within an upstream wavelength range supported by the OLT.
